# EUROPEAN PATENT APPLICATION

(11) **EP 1 923 895 A1**
(43) Date of publication of application: **21.05.2008**
(21) Application number: 06797553.2
(22) Date of filing: 06.09.2006
(51) Int. Cl.: H01G 9/058

(54) **POLARIZABLE ELECTRODE**

(30) Priority: 08.09.2005 JP 2005260381
(71) Applicant: Kuraray Co., Ltd., Okayama 710-8622 (JP)
(72) Inventor: SUGO, Nozomu, Kurashiki-shi, Okayama 710-8691 (JP); IWASAKI, Hideharu, Kurashiki-shi, Okayama 710-8691 (JP)
(74) Representative: Müller-Boré & Partner Patentanwälte
(86) International application number: PCT/JP2006/317658
(87) International publication number: WO 2007/029742

(57) **Abstract**

A polarizable electrode to be used in an electric double layer capacitor, which has an excellent depressing effect on the generation of gas, is coated on the surface thereof with a thin film layer of a gelling organic polymer compound whose thickness is less than 5 µm. As the gelling organic polymer compound, organic polymer compounds having -COO- bonds, or preferably acrylic polymers, can be used. Specific examples thereof include polyalkyl methacrylate or polyalkyl acrylate, which are capable of forming a stereocomplex. Among these, poly(methyl methacrylate) is preferable. Polyvinylidene fluoride resins can also be preferably used. It is preferable that an electrical double layer capacitor include a pair of polarizable electrodes and a separator disposed therebetween and that at least one of the pair of polarizable electrodes be the above-described polarizable electrode having an excellent depressing effect on the gas generation.

## Description

### TECHNICAL FIELD

The present invention relates to a polarizable electrode that can be used as an electrode within an electric double layer capacitor.

### BACKGROUND ART

Recently, a certain type of organic electric double layer capacitor (hereinafter, referred to simply as a capacitor) employing a layered structure and a non-aqueous electrolyte is drawing considerable attention as a preferred electrical storage device. In this instance, the layered structure being referred to includes a pair of polarizable electrodes (being positive and negative) made of activated carbon with a separator being disposed therebetween, and the non-aqueous electrolyte, in which the layered structure is to be immersed, is prepared by dissolving quaternary ammonium salt in an organic solvent. Such capacitors have electrical capacity greater than that of conventional capacitors, and its output performance and durability represented by cycle characteristics and the like exceeds those of battery cells.

However, an organic capacitor contains a small amount of water remaining therein, which causes the non-aqueous electrolyte to disintegrate during usage and generate gas, impairing its durability. Along with the generation of gas, particulates of the activated carbon or the conductive assistant can migrate into the non-aqueous electrolyte, thereby increasing the risk of leakage current or a short circuit. Furthermore, if a large amount of gas is generated inside the capacitor, bubbles of the gas then gather on the surface of the activated carbon of the polarizable electrode, resulting in a shortage of ions there. Consequently, an increase in the internal resistance of the capacitor as a whole or a decrease in its capacity occurs. Furthermore, accidents such as liquid leakage or a burst of the capacitor casing may occur.

In order to deal with these problems, several solutions have been proposed. In order not to depress the generation of gas itself but to instead weaken the effect of the generated gas, Patent Document 1 proposes that, a gas storage space be provided within the capacitor casing; Patent Document 2 proposes that a desiccating agent such as a zeolite be placed inside an outer casing; and Patent Document 3 proposes that a gas release valve be provided in the capacitor casing. However, in the first and second proposed solutions, the volume of the capacitor becomes large, and, in the third proposed solution, moisture may enter into the capacitor through the release valve.

Conversely, as an attempt to depress the generation of gas itself, Patent Document 4 proposes that the concentration of surface functional groups such as the carboxyl group, the quinone group, the hydroxyl group, and the lactone group residing on the surface of the activated carbon powder be held to 1000 µmol/g or less; and Patent Document 5 also proposes that diphenyl be added to the non-aqueous electrolyte that is used in the capacitor.

These methods for depressing the generation of gas are considered to be effective to a certain extent in controlling the generation of gas. However, when an electric double layer capacitor is to be used in an environment where the generation of gas would be promoted, such as in the high temperature environment of an engine room of an automobile, or under a high voltage environment intended for higher energy operation, the generation of gas cannot be sufficiently depressed.

It should be noted that Patent Documents 6 and 7 propose other concepts that are not directed toward depressing the generation of gas. The concepts suggested are that the surface of the polarizable electrode of the electric double layer capacitor be coated with an organic compound.

However, the concept proposed in Patent Document 6 is to apply a resin that swells in a polar solvent (hereinafter referred to as a polar solvent swelling resin) and forms a film thereof on a carbon electrode so that it functions as a separator. Therefore, if the thickness of the polar solvent swelling resin film is made too thin, then a short circuit may occur and the film will not function as a separator. For this reason, the thickness of the polar solvent swelling resin layer was chosen to be as large as approximately 10 µm in one example provided in Patent Document 6. In addition to this, since the layer also serves as a separator, the polar solvent swelling resin layer needs to coat the entire surface of the electrode in order to avoid a short circuit. Therefore, the application of the technological concept of Patent Document 6 to the polarizable electrode made of activated carbon in the electric double layer capacitor results in increased resistance of the capacitor.

Similarly, according to the technological concept proposed in Patent Document 7, before a capacitor is assembled, the surface of the electrode is coated with an electrode coating agent containing electrochemically polymerizing monomers. Then, by undertaking the electrochemical polymerization, a polymerized film is formed, which is intended to reduce any leakage current without reducing the electrostatic capacity. However, the polymerized film formed with the technology of Patent Document 7 may contain unreacted monomers, and if that is the case, the internal pressure of the capacitor may increase due to the time-varying change in the capacitor's performance or the volatilization of the remaining monomers. Furthermore, since the technology of Patent Document 7 requires complicated manufacturing procedures, it is not suited for manufacturing polarizable electrodes in an industrial context. Therefore, it would be difficult to apply the technological concepts of Patent Documents 6 or 7 to depress the generation of gas in an electric double layer capacitor.
[Patent Document 1] Japanese Patent Application Laid-Open No. Hei 9-162082
[Patent Document 2] Japanese Patent Application Laid-Open No. Hei 10-321483
[Patent Document 3] Japanese Utility Model Application Laid-Open No. Hei 1-73921
[Patent Document 4] Japanese Patent Application Laid-Open No. 2003-243265
[Patent Document 5] Japanese Patent Application Laid-Open No. 2004-146610
[Patent Document 6] Japanese Patent Application Laid-Open No. 2000-173875
[Patent Document 7] Japanese Patent Application Laid-Open No. 2002-64037

### DISCLOSURE OF THE INVENTION

### PROBLEMS TO BE SOLVED BY THE INVENTION

It is an object of the present invention to provide a polarizable electrode that can be manufactured using a simple method without resorting to a complicated procedure such as electrochemical polymerization. Such a polarizable electrode should be capable of significantly depressing the generation of gas when used in an electric double layer capacitor.

### MEANS FOR SOLVING THE PROBLEMS

After a series of in-depth examinations, the inventors have found that the above-mentioned object can be unexpectedly accomplished by an extremely simple method and have therefore accordingly achieved the aim of the present invention. Specifically, the surface of a polarizable electrode is lightly coated with a gelling organic polymer compound that is capable of forming a gel in a non-aqueous electrolyte used in an electric double layer capacitor.

In other words, the present invention provides a polarizable electrode that contains activated carbon and is characterized in that its surface is coated with a thin film layer of a gelling organic polymer compound, a thickness of the thin film layer being less than 5 µm.

### EFFECTS OF THE INVENTION

The polarizable electrode of the present invention is configured such that its electrode surface is coated with a very thin layer of a gelling organic polymer whose thickness is less than a certain value. Therefore, complicated manufacturing procedures are not required, and, moreover, the generation of gas can be significantly depressed when used in an electric double layer capacitor. As a result, liquid leakage of the non-aqueous electrolyte or deterioration failure becomes unlikely, thereby providing capacitors utilizing the present invention with excellent durability. Furthermore, since the capacitor does not need to be deliberately provided with a gas storage space, capacitors that are both compact and efficient can be provided.

### BRIEF DESCRIPTION OF THE DRAWINGS

Fig. 1 is a schematic cross sectional view illustrating one example of a coin-type capacitor.
Fig. 2 is a photograph of a cross section of the electrode used in Example 1.
Fig. 3 is a schematic cross sectional view illustrating a cylindrical capacitor.
Fig. 4 is a magnified view of Section A of the cylindrical capacitor of Fig. 3.
Fig. 5 is a graph illustrating the change of cell resistance in Examples 1 to 3 and contrastive examples to Examples 2 and 3.
Fig. 6 is a graph illustrating the change of electrostatic capacitance in Examples 1 to 3 and contrastive examples to Examples 2 and 3.
Fig. 7 is a graph illustrating the relationship between the volume and the composition of generated gas in Examples 1 to 3 and contrastive examples to Examples 2 and 3.
Fig. 8 is a graph illustrating the change of cell resistance in Examples 4 and 5 and contrastive examples thereto.
Fig. 9 is a graph illustrating the change of electrostatic capacitance in Examples 4 and 5 and contrastive examples thereto.
Fig. 10 is a graph illustrating the volume of generated gas in Examples 4 to 6 and Comparative Example 1.
Fig. 11 is a photograph of a cross section of the electrode used in Example 5.
Fig. 12 is a photograph of a cross section of the electrode used in Comparative Example 2.

### DESCRIPTION OF THE REFERENCE NUMERALS

- 1: Polarizable electrode
- 2: Polarizable electrode
- 3: Charge collector
- 4: Charge collector
- 5: Separator
- 6: Top lid
- 7: Bottom lid
- 8: Gasket
- 9: Bottomed cylindrical container
- 10: Electrode device
- 11: Opening
- 12: Lid
- 13: Hollow core
- 14: Polarizable electrode
- 15: Charge collector
- 16: Electrode sheet
- 17: Separator

### BEST MODE FOR CARRYING OUT THE INVENTION

The present invention is a polarizable electrode which contains activated carbon and is characterized in that the surface thereof is coated with a thin film layer of a gelling organic polymer compound whose thickness is less than 5 µm.

Activated carbon that is a constituent of a polarizable electrode of the present invention can be obtained from a carbonaceous material, which serves as the source material for the activated carbon, by activating it using conventional activating methods. There is no particular limitation to the kind of carbonaceous material used, as long as it can form activated carbon by regular activation, and the carbonaceous material can be chosen from a wide range of choices including plant-based materials, mineral-based materials, natural materials, and synthetic materials. Specifically, the plant-based carbonaceous materials include wood, charcoal, and fruit shells such as coconut shells; The mineral-based carbonaceous materials include petroleum and/or coal pitch, mesophasic pitch, petroleum coke, coal coke, and pitch coke; The natural carbonaceous materials include natural fibers such as cotton and hemp, regenerated fibers such as rayon and viscose rayon, and semi-synthetic fibers such as acetate and triacetate; The synthetic carbonaceous materials include polyamide resins such as nylon, polyvinyl alcohol resins such as vinylon, vinyl chloride resin, polyurethane resin, phenol resin, and saccharides such as sucrose.

There is no limitation as to the appearance of the carbonaceous materials to be used. A variety of shapes and conditions that the carbonaceous materials may take are allowed, including those that are granular, pulverized, fibrous, or sheet-like. These carbonaceous materials are to be activated to become activated carbon, and their activation methods are not limited to any one particular method, either. For example, conventional activation methods such as a chemical activation that uses steam, acidic gases such as carbon dioxide, sodium hydroxide, potassium hydroxide, calcium chloride, zinc chloride, or the like can be employed. The appearance of the activated carbon is not limited to any particular shape and condition, either, and those that are granular, pulverized, fibrous, or sheet-like can equally be used.

A polarizable electrode, before coating with the gelling organic polymer compound, can be prepared from the above-described activated carbon using conventional methods. For example, activated carbon may be well kneaded with a binding agent, wherein the amount of the binding agent is in the range of approximately a few percent to a few tens of percent if necessary, where the binding agent may be polyvinylidene fluoride, polytetrafluoroethylene, or a styrene-butylene copolymer. Then, the activated carbon is formed into a polarizable electrode by placing it in a die for pressure forming, configuring it into a sheet by rolling and then stamping it into a desired shape, or applying it onto a charge collector, letting it dry, and subjecting it to rolling. When this kneading process is being performed, a solvent such as water and organic compounds such as alcohol and N-methyl-pyrrolidone, a dispersant, and other additives may be used if necessary. Furthermore, during the kneading process, conductive materials such as carbon black, carbon tube, carbon fiber, and Ketjen black may be added to reduce the electrical resistance of the electrode. Accordingly, the internal resistance of the polarizable electrode can be reduced. The volume of the electrode can also be reduced.

During the kneading or forming process, heat may be applied to the activated carbon if necessary. However, heating it to a high temperature that exceeds the necessary level may not only deteriorate the binding agent used therein but also affect physical properties of the activated carbon associated with its surface structure, such as the specific surface area. Therefore, temperature conditions need to be carefully determined and controlled. In general, the temperature should not exceed 250°C.

The thickness of the polarizable electrode thus formed before coating with a gelling organic polymer compound is typically in the range of 20 µm to 1 mm.

An important feature of the present invention is that the surface of the electrode is coated with a thin film of a gelling organic polymer compound. Such a coating of a thin film of a gelling organic polymer compound on the electrode surface can significantly depress the generation of gas without reducing the electrostatic capacitance or increasing the electrical resistance of such. In this instance, the phrase 'gelling organic polymer compound' refers to an organic polymer compound that can gelate in a non-aqueous electrolyte.

With regard to the gel form of the organic polymer compound, either physical gels such as stereocomplex or chemical gels that include a bridged structure with chemical bonding are adequate as long as the organic polymer compound stands in the gel form. With regard to the organic polymer compound itself, those that have an affinity for non-aqueous electrolytes are preferable because, with the mesh structure of the gel becoming loose, electrolyte ions can easily move to the surface of the active material and as such, the internal resistance does not increase.

It is preferable that such a gelling organic polymer compound be an organic polymer compound with "-COO-" bonds, including ester compounds with "-COO-" bonds, carbonate compounds with "-OCOO-" bonds, amide compounds or polyamides with "-CONH-" bonds, and polyurethane with "-NHCOO-" bonds.

Specific examples of the gelling organic polymer compound include polyvinyl acetate, poly(methyl acrylate), poly(methyl methacrylate), poly(butyl methacrylate), polycaprolactone, polylactic acid, polyethylene terephthalate, polybutylene terephthalate, polyvinylene carbonate, 6-nylon, 6,6-nylon, 12-nylon, polyacrylamide, polyvinyl pyrrolidone, polyethylene carbonate, polybutylene carbonate, bisphenol-A-carbonate, polyvinylidene fluoride, polyoxyethylene, and polyoxypropylene, as well as copolymers thereof.

When carbonate solvents are used for a non-aqueous electrolyte, it is preferable that organic polymer compounds having the ester bonds and/or the carbonate bonds be used as the gelling organic polymer compound. Examples of such organic polymer compounds having the ester bonds and/or the carbonate bonds include acrylic polymers, polyvinyl acetate, polycarbonate, polyester, and polylactide. Among these, acrylic polymers are preferable, and in particular, polyalkyl alkenoate such as polyalkyl methacrylate and polyalkyl acrylate are preferable. Specifically, poly(methyl methacrylate), poly(ethyl methacrylate), poly(propyl methacrylate), poly(butyl methacrylate), poly(methyl acrylate), poly(propyl acrylate), and poly(butyl acrylate) can be used. In particular, poly(methyl methacrylate) can preferably be used.

In particular, as the gelling organic polymer compound, it is preferable that compounds consisting of two different compounds and capable of forming so called stereocomplex be used. These two different compounds should include a constituent part whose primary structure is the same but stereoregularity is different. As a stereocomplex that has an excellent gelling property, a mixture of a syndiotactic organic polymer compound and an isotactic organic polymer compound can be exemplified. Specific examples thereof include a stereocomplex that consists of a syndiotactic polymer and an isotactic polymer of poly(methyl methacrylate), poly(ethyl methacrylate), poly(propyl methacrylate), poly(butyl methacrylate), or the like. Among these, examples of isotactic organic polymer compounds preferably include poly(methyl methacrylate), and examples of syndiotactic organic polymer compounds preferably include poly(methyl methacrylate), poly(ethyl methacrylate), poly(propyl methacrylate), and poly(butyl methacrylate). In particular, it is preferable that both isotactic organic polymer compound and syndiotactic organic polymer compound be poly(methyl methacrylate).

The "isotacticity" of an isotactic organic polymer compound constituting the stereocomplex is preferably 80% or more, and more preferably 90% or more, because the gelling property tends to deteriorate if it is too low. On the other hand, the "syndiotacticity" of a syndiotactic organic polymer compound constituting the stereocomplex is preferably 40% or more, and more preferably 50% or more, because the gelling property also tends to deteriorate if it is too low.

Furthermore, in terms of the gelling property, a percentage of the isotactic organic polymer compound present within the stereocomplex is preferably 20 to 80% by weight, more preferably 25 to 60% by weight, and particularly preferably 30 to 40% by weight. Similarly, a percentage of the syndiotactic organic polymer compound present within the stereocomplex is preferably 20 to 80% by weight, more preferably 40 to 75% by weight, and particularly preferably 60 to 70% by weight.

Furthermore, polyvinylidene fluoride resins such as polyvinylidene fluoride with a gelling property and polyoxyalkylene containing polyoxyethylene units or polyoxypropylene units, as well as copolymers thereof, can preferably be used. When polyvinylidene fluoride is used, it is preferable that polyvinylidene fluoride copolymerized with hexafluoropropylene be used in terms of the solubility and the improved stability of the gel form.

In the present invention, the surface of a polarizable electrode is coated with a gelling organic polymer compound. Since, if the coating layer is too thick, the resistance of the capacitor tends to become large, the thickness of the coating layer needs to be less than 5 µm. More preferably, the thickness needs to be 2.5 µm or less, and still more preferably 2.2 µm or less. However, since, if the coating layer is too thin, the depressing effect on the generation of gas tends to become weak, it is preferable that the thickness be 0.1 µm or more, which is also preferred in terms of the homogeneity of the formation of the film. The thickness of the coating layer can be measured by observing a cross section of the electrode in dry conditions under a scanning electron microscope. In the present invention, it should be understood that the thickness of the coating layer means any value or range of values falling between the minimum and maximum thicknesses measured on a cross section of the electrode.

Mass per unit area of the gelling organic polymer compound coating the electrode, which could be rephrased as the amount of coating, depends on the density of the gelling organic polymer. However, if this is too low, then the depressing effect on the gas generation tends to become unsatisfactory, and if it is too high, then the resistance tends to become large. Therefore, it is preferably chosen to be in the range of 0.01 to 5.0 mg/cm², more preferably in the range of 0.05 to 1.0 mg/cm², and still more preferably in the range of 0.10 to 0.3 mg/cm².

A polarizable electrode may contain a fissure within itself, and the coating of a gelling organic polymer compound may not be formed on the inside of such a fissure. However, if the outside surface of the electrode is at least partially coated with the gelling organic polymer compound, then the gas depressing effect can in principle be obtained. In particular, when the polarizable electrode is to be used in an electric double layer capacitor, it is preferable that a thin layer of the gelling organic polymer compound be formed on the surface that makes contact with the separator, especially in terms of ensuring the depressing effect on the generation of gas.

In order to coat a polarizable electrode with a gelling organic polymer compound, the electrode may be sprayed with an organic solvent having a gelling organic polymer compound dissolved therein, or it may be immersed in the above-mentioned solution and left until the solvent evaporates. Examples of other methods include a doctor blade method, a screen printing method, a gravure coating method, a roll coating method, a metal mask method, and an electrostatic painting method. If necessary, rolling can be conducted by a flat plate press, a calender roll, or the like.

A polarized electrode of the present invention is useful as an electrode used in an electric double layer capacitor. Such an electric double layer capacitor has a basic structure including a pair of polarizable electrodes and a separator disposed therebetween. By using the polarizable electrode of the present invention as at least one of the pair of polarizable electrodes, the generation of gas can be depressed.

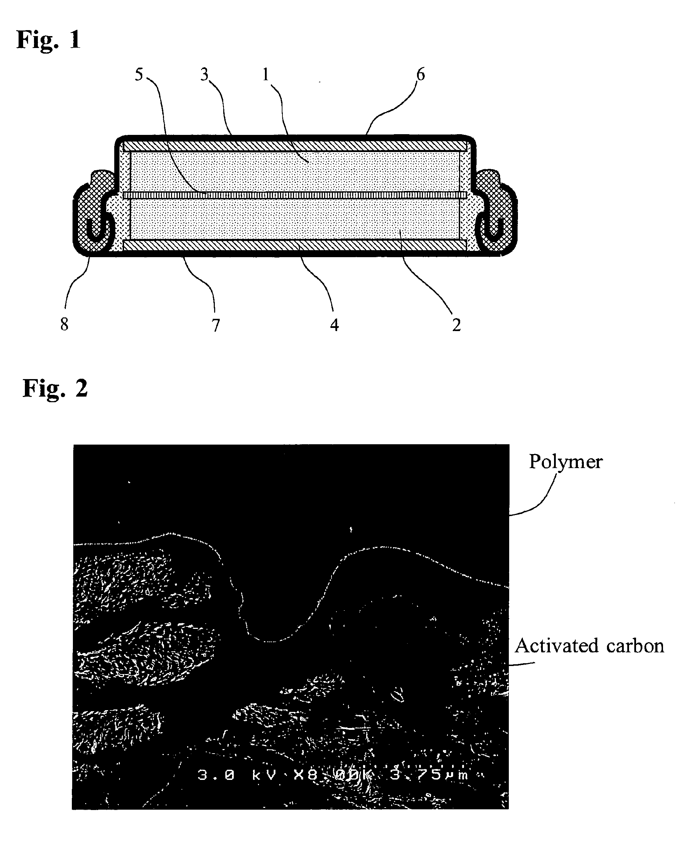

The electric double layer capacitor can take an arbitrary form, including coin-type, cylindrical, square, and laminated forms, or the like. Typically, the capacitor is made of a pair of polarizable electrodes and a separator disposed therebetween, both being place in a case, where the polarizable electrodes and the separator are wet with a non-aqueous electrolyte. Furthermore, a charge collector is located on the case side of either polarizable electrode, and the case is sealed with a sealing material between a top lid and a lower case in order to prevent any electrolyte from leaking. Fig. 1 is a schematic cross sectional view illustrating a coin-type capacitor, where reference numerals 1 and 2 designate polarizable electrodes. Other constituents are charge collectors 3 and 4, a separator 5, a top lid 6, a bottom lid 7, and a gasket 8.

Constituent elements of the electric double layer capacitor can be chosen to be similar to those of a convention capacitor except that the polarizable electrodes of the present invention are used.

As a charge collecting member, aluminum, conductive polymers, and the like, can be used. In order to reduce resistance of the charge collecting member, a metal foil, namely, the charge collecting member, and a polarizable electrode can be glued together with a conductive polymer or a mixture of a synthetic resin, and a conductive material, or a conductive metal such as aluminum or a conductive polymer is then thermally sprayed onto the polarizable electrode, thereby forming the charge collecting member. Examples of the seal material for the capacitor include an insulator such as polypropylene, butyl rubber, polyamide, polyester, and polyphenylene sulfide, or the like. Examples of the case include an, aluminum case, a stainless steel case, or the like.

A non-aqueous electrolyte used in the present invention is prepared by dissolving an electrolytic salt compound in an organic electrolyte solvent. However, when the electrolyte is a liquid, the solvent may not be used.

Examples of the electrolytic salt compounds include ammonium tetrafluoroborates such as tetraethyl ammonium tetrafluoroborate, tetramethyl ammonium tetrafluoroborate, tetrapropyl ammonium tetrafluoroborate, tetrabutyl ammonium tetrafluoroborate, trimethylethyl ammonium tetrafluoroborate, triethylmethyl ammonium tetrafluoroborate, diethyldimethyl ammonium tetrafluoroborate, N-ethyl-N-methyl pyrrolidinium tetrafluoroborate, N,N-tetramethylene pyrrolidinium tetrafluoroborate, and 1-ethyl-3-methyl imidazolium tetrafluoroborate; ammonium perchlorates such as tetraethyl ammonium perchlorate, tetramethyl ammonium perchlorate, tetrapropyl ammonium perchlorate, tetrabutyl ammonium perchlorate, trimethylethyl perchlorate, triethylmethyl ammonium perchlorate, diethyldimethyl ammonium perchlorate, N-ethyl-N-methyl pyrrolidinium perchlorate, N,N-tetramethylene pyrrolidinium perchlorate, and 1-ethyl-3-methyl imidazolium perchlorate; and ammonium hexafluorophosphates such as tetraethyl ammonium hexafluorophosphate, tetramethyl ammonium hexafluorophosphate, tetrapropyl ammonium hexafluorophosphate, tetrabutyl ammonium hexafluorophosphate, trimethylethyl ammonium hexafluorophosphate, triethylmethyl ammonium hexafluorophosphate, and diethyldimethyl ammonium hexafluorophosphate.

Examples of organic electrolyte solvents include carbonates such as dimethyl carbonate, diethyl carbonate, ethylene carbonate, and propylene carbonate; nitriles such as acetonitrile and propionitrile; lactones such as γ-butyrolactone, α-methyl-γ-butyrolactone, β-methyl-γ-butyrolactone, γ-valerolactone, and 3-methyl-γ-valerolactone; sulfoxides such as dimethyl sulfoxide and diethyl sulfoxide; amides such as dimethyl formamide and diethyl formamide; ethers such as tetrahydrofuran and dimethoxyethane; and dimethylsulfolane and sulfolane, and the like. Although these organic solvents are typically used alone, they can also be used as a mixed solvent of two or more of them.

In the present invention, the concentration of the above-mentioned electrolytic salt is not limited to any particular value as long as the electrolytic salt does not form into crystals when the non-aqueous electrolyte is prepared. However, when using triethylmethyl ammonium tetrafluoroborate or the like, for example, which is a solid at room temperature, if the electrolytic concentration is too low, then the electrostatic capacitance may decrease because of a shortage of the electrolyte, and if it is too high, then the salt may precipitate upon a decrease in temperature. Therefore, the concentration is preferably chosen to be in the range of 0.1 to 6 mol/l, more preferably in the range of 0.5 to 5 mol/l, and still more preferably in the range of 1.0 to 2.5 mol/l. When using ionic liquid such as 1-ethyl-3-methylimidazolium tetrafluoroborate as an electrolyte, there is no upper limit to the concentration as long as it does not precipitate out in the intended temperature range. Furthermore, additives may be used provided that the effect of the present invention is not mitigated.

In the following paragraphs, the present invention will be described in detail by way of specific examples, which should not be considered, however, to limit the scope of the present invention. In the following examples, coating solutions A to D for applying gelling organic polymer compounds were prepared in the reference examples 1 to 4 below.

### Reference Example 1: Preparation of Coating Solution A

2 g of isotactic poly(methyl methacrylate) (i-PMMA, Mw 100,000, isotacticity 93%), 1 g of syndiotactic poly(methyl methacrylate) (s-PMMA, PARAPET LW-500 manufactured by KURARAY CO., LTD., Mw 38,000, syndiotacticity 60%), and 297 g of chloroform were put in a three neck flask that was provided with a stirrer and a cooler. The contents were then evenly mixed to obtain Coating Solution A.

### Reference Example 2: Preparation of Coating Solution B

The same procedure as in Reference Example 1 was carried out to obtain Coating Solution B except that the amounts of i-PMMA and s-PMMA used were 1 g and 2 g, respectively.

### Reference Example 3: Preparation of Coating Solution C

The same procedure as in Reference Example 1 was carried out to obtain Coating Solution C except that 1 g of hexafluoropropylene-copolymerized polyvinylidene fluoride (manufactured by ALDRICH, Mw 130,000) and 99 g of tetrahydrofuran were used.

### Reference Example 4: Preparation of Coating Solution D

The same procedure as in Reference Example 1 was carried out to obtain Coating Solution D except that 10 g of polyvinylidene fluoride used in Reference Example 3 and 40 g of N-methyl-pyrrolidone were used.

### Example 1

Activated carbon made from phenolic resin (RP20 manufactured by KURARAY CHEMICAL CO., LTD.) was mixed with acetylene black and polytetrafluoroethylene such that the ratio by mass of the activated carbon, the acetylene black, and the polytetrafluoroethylene would be 84 : 8 : 8. The mixture obtained was further mixed with isopropanol as a kneading aid and further kneaded under a pressurized condition for 8 minutes to obtain a kneaded mixture where the polytetrafluoroethylene had been fibrillated.

Then, the kneaded mixture obtained was pulverized to obtain powder, the average diameter of individual particles being approximately 1 mm, and this powder was subjected to a calender to obtain a sheet product. Then, this sheet product was fed to a rolling machine, and an electrode sheet of 110 mm in width was fabricated. This electrode sheet was put on both sides of an aluminum charge collector of 115 mm in width with a conductive paste containing fine powders of carbon black and graphite to obtain a polarizable electrode. The obtained electrode was then placed under a flow of dry air for 30 minutes so that it would dry off. The temperature and the flow rate of the dry air were 150°C and 3 1/min, respectively.

The obtained polarizable electrode was sprayed for coating on its negative activated carbon side with Coating Solution A and let dried at 50°C such that the coating mass (of the gelling organic polymer compound) per unit area of the electrode after drying would become 0.19 mg/cm². When a cross section of the electrode in a dry condition was observed under a scanning electron microscope (S-4000 manufactured by HITACHI, LTD.), the existence of a coating layer of 0.27 µm to 2.2 µm in thickness was confirmed. A cross sectional view of the electrode by the scanning electron microscope is shown in Fig. 2.

Next, a couple of polarizable electrodes were disposed to face to each other with a separator made of rayon being inserted therebetween, so that an electrode device in which a coating film of the gelling organic polymer compound would be on the separator's side was obtained. This electrode device was rolled in the longitudinal direction and placed around the hollow core of a bottomed aluminum cylindrical container, such that the electrode and the separator were wound around the core. The bottomed cylindrical container that contained the electrode device was then let dried for 72 hours under a depressurized condition of 5 Pa and a temperature of 160°C.

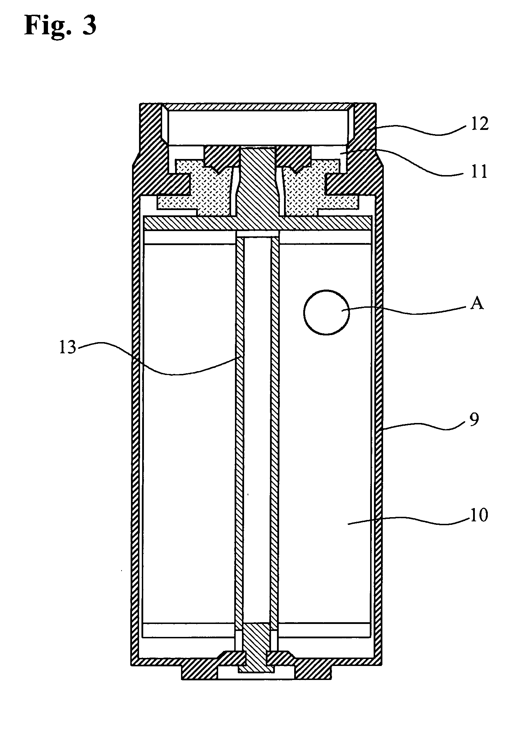

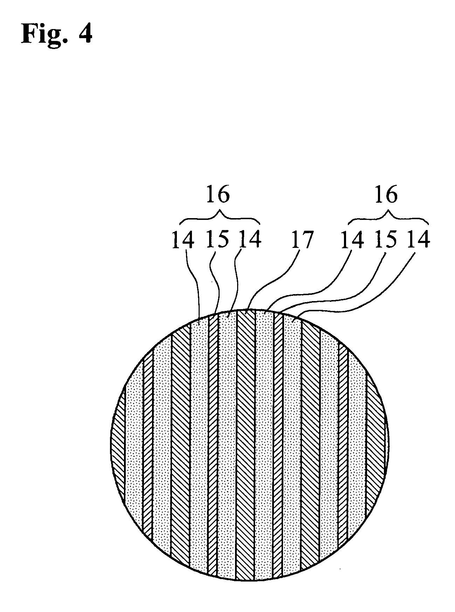

Then, the electrode device that was contained in the bottomed cylindrical container was impregnated with propylene carbonate solution of 1.5 mol/l of triethylmethyl ammonium tetrafluoroborate. The opening of the container was then tightly closed with a lid, thereby obtaining a cylindrical capacitor as illustrated in Fig. 3. Constituent elements appearing in Fig. 3 are the bottomed cylindrical container 9, the electrode device 10, an opening 11 of the container, the lid 12, and the hollow core 13. Fig. 4 is a magnified view of Section A shown in Fig. 3, where the polarizable electrode 14, the charge collector 15, the electrode sheet 16, and the separator 17 are duly illustrated.

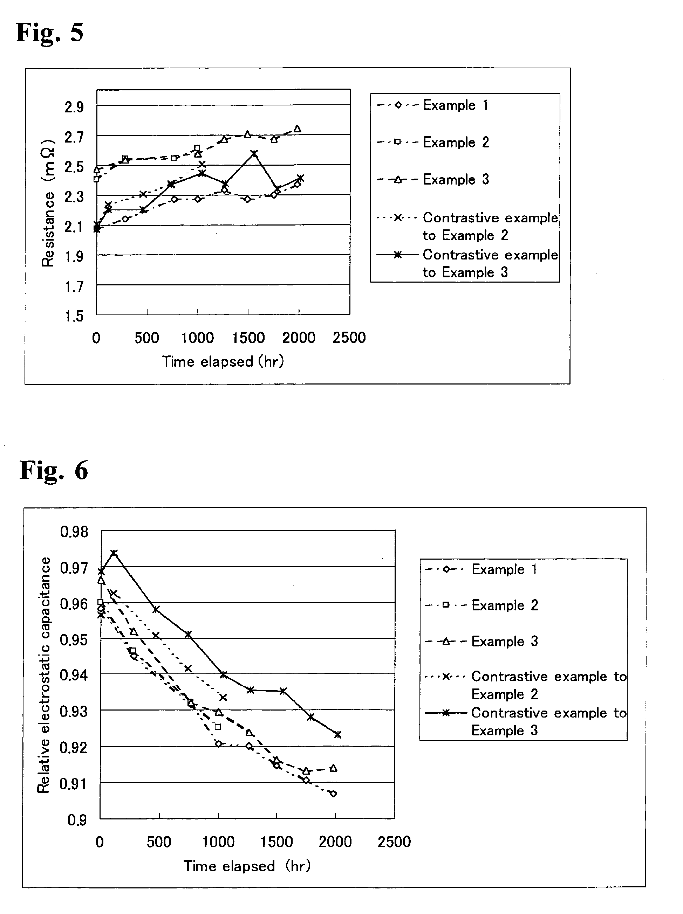

Then, a voltage of 2.5 V was continuously impressed to this obtained cylindrical capacitor at a temperature of 45°C, and the change in discharge performance at 25°C was measured at a certain interval. The volume of generated gas was also measured at the point in time when 2000 hours had passed. Regarding the discharge performance, the capacitor was charged at 20 A up to 2.5 V, and the internal resistance and the electrostatic capacitance during constant-current discharge at 30 A were measured. The internal resistance was determined by drawing a tangent line at a point where the discharge voltage had decreased to 90% of the charging voltage. The cell resistance and the relative electrostatic capacitance with respect to elapsed time are shown in Figs. 5 and 6, respectively. As can be seen from these figures, an increase in the cell resistance and a decrease in the cell relative electrostatic capacitance associated with the application of the solution are very small and propose no practical problems.

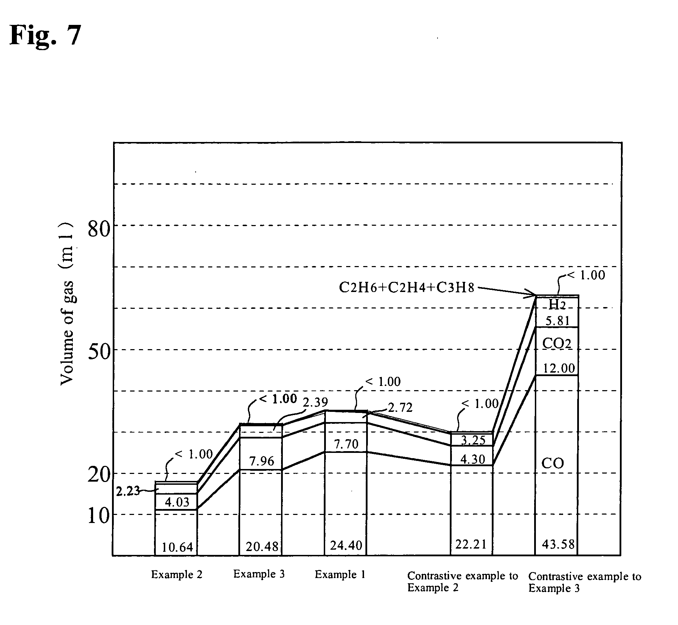

Furthermore, the generated gas was extracted from the cylindrical capacitor after 2000 hours of impressing a voltage of 2.5 V at 45°C, and its volume was measured. The volume of the generated gas was 35 ml, which was recognized as an depressing effect against gas generation, representing approximately 44% reduction with respect to 62 ml measured in Comparative Example 1 of no special arrangement to be described later. The volume of the generated gas and the result of compositional analysis of the gas using the gas chromatography are shown in Fig. 7. Although principal components of the generated gas were hydrogen, carbon monoxide, and carbon dioxide, an depressing effect on carbon monoxide was most significant.

### Example 2

Using activated carbon of the same lot as in Example 1, a polarizable electrode was obtained in a similar manner as in Example 1. With this polarizable electrode, a coated electrode and then a cylindrical capacitor were fabricated. The whole procedure was similar to that in Example 1 except that a coating mass of Coating Solution A per unit area of the electrode after drying was chosen to be 0.35 mg/cm². Similarly as in Example 1, a cross section of the electrode in a dry condition was observed under a scanning electron microscope, and the existence of a coating layer of 0.26 µm to 2.5 µm of thickness was confirmed. The changes of cell resistance and electrostatic capacitance of the cylindrical capacitor are shown in Figs. 5 and 6, respectively. The cell resistance and the relative electrostatic capacitance with respect to elapsed time that were obtained by repeating the present example except that the polarizable electrode was not coated with a gelling organic polymer compound are also shown in Figs. 5 and 6, respectively (contrastive example to Example 2).

Furthermore, the generated gas was extracted from the cylindrical capacitor after 1000 hours of impressing a voltage of 2.5 V at 45°C, and its volume was measured. The volume of the generated gas was 17 ml, which was recognized as an depressing effect against gas generation, representing approximately 44% reduction with respect to 30 ml measured in Comparative Example 1 of no special arrangement to be described later. The volume of the generated gas and the result of compositional analysis of the gas are shown in Fig. 7. The measured volume of the gas and the result of the compositional analysis of the gas that were obtained by repeating the present example except that the polarizable electrode was not coated with a gelling organic polymer compound are also shown in Fig. 7 (contrastive example to Example 2).

### Example 3

A polarizable electrode and then a cylindrical capacitor were fabricated in a similar manner as in Example 1 except that a coating mass of Coating Solution A per unit area of the electrode after drying was chosen to be 0.41 mg/cm². Similarly as in Example 1, a cross section of the electrode in a dry condition was observed under a scanning electron microscope, and the existence of a coating layer of 0.28 µm to 3.0 µm in thickness was confirmed. The changes of cell resistance and electrostatic capacitance of the cylindrical capacitor are shown in Figs. 5 and 6, respectively. The cell resistance and the relative electrostatic capacitance with respect to elapsed time that were obtained by repeating the present example except that the polarizable electrode was not coated with a gelling organic polymer compound are also shown in Figs. 5 and 6, respectively (contrastive example to Example 3).

Furthermore, the generated gas was extracted from the cylindrical capacitor after 2000 hours of impressing a voltage of 2.5 V at 45°C, and its volume was measured. The volume of the generated gas was 31 ml, which was recognized as an depressing effect against gas generation, representing approximately 50% reduction with respect to 62 ml measured in Comparative Example 1 of no special arrangement to be described later. The volume of the generated gas and the result of compositional analysis of the gas are shown in Fig. 7. The measured volume of the gas and the result of the compositional analysis of the gas that were obtained by repeating the present example except that the polarizable electrode was not coated with a gelling organic polymer compound are also shown in Fig. 7 (contrastive example to Example 3).

### Example 4

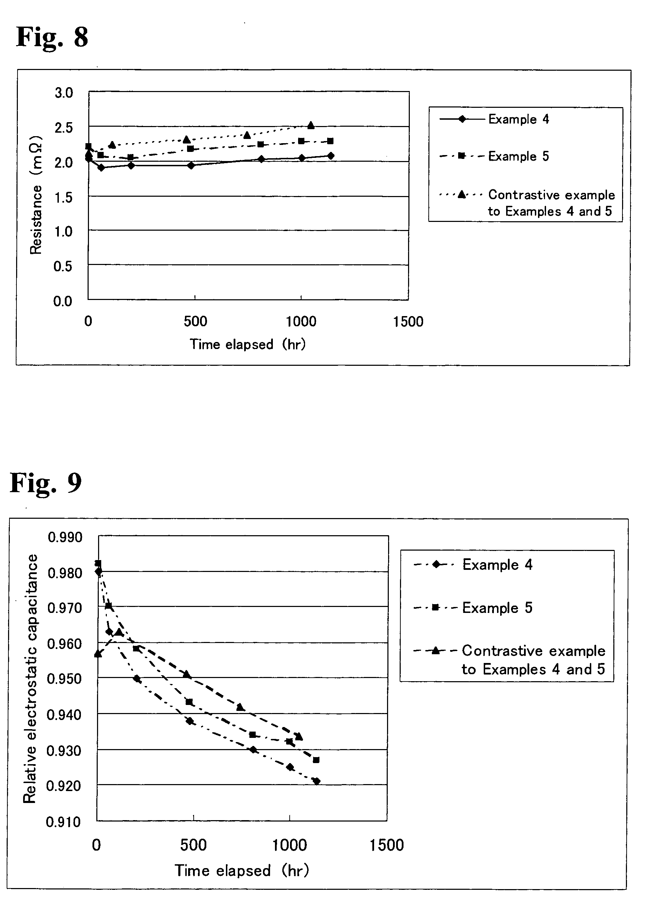

A polarizable electrode and then a cylindrical capacitor were fabricated in a similar manner as in Example 1 except that Coating Solution B was used instead of Coating Solution A and that a coating mass of Coating Solution B per unit area of the electrode after drying was chosen to be 0.25 mg/cm². A cross section of the electrode under a dry condition was observed under a scanning electron microscope as in Example 1, and the existence of a coating layer of 0.24 µm to 2.4 µm in thickness was confirmed. The cell resistance and the relative electrostatic capacitance of the obtained cylindrical capacitor with respect to elapsed time are shown in Figs. 8 and 9, respectively.

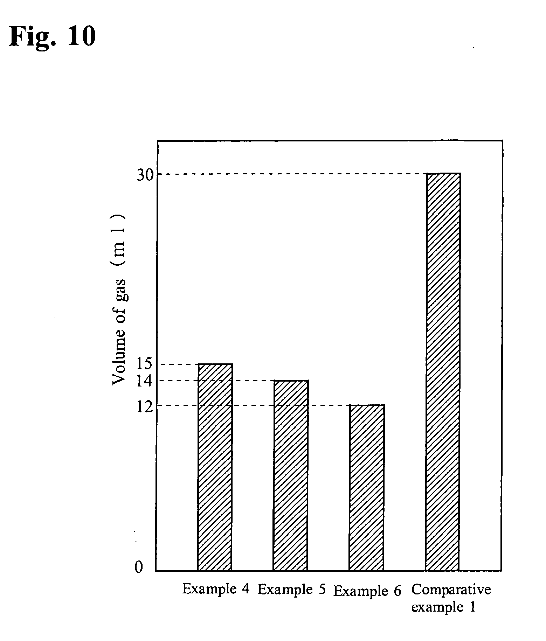

Furthermore, the generated gas was extracted from the cylindrical capacitor after 1000 hours of impressing a voltage of 2.5 V at 45°C, and its volume was measured. The volume of the generated gas was 15 ml, which was recognized as an depressing effect against gas generation, representing approximately 50% reduction with respect to 30 ml measured in Comparative Example 1 of no special arrangement to be described later. The measurement result of the volume of the generated gas is shown in Fig. 10. The measurement result of the volume of the gas that was obtained by repeating the present example except that the polarizable electrode was not coated with a gelling organic polymer compound is also shown in Fig. 10 (contrastive example to Example 4).

### Example 5

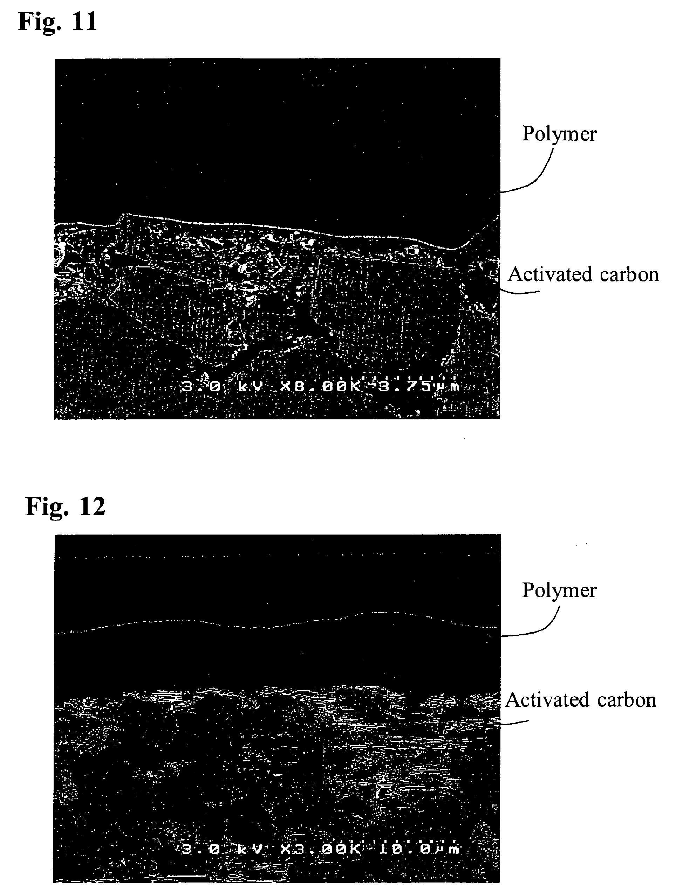

A polarizable electrode and then a cylindrical capacitor were fabricated in a similar manner as in Example 1 except that Coating Solution C was used instead of Coating Solution A and that a coating mass of Coating Solution C per unit area of the electrode after drying was chosen to be 0.14 mg/cm². When a cross section of the electrode in a dry condition was observed under a scanning electron microscope (S-4000 manufactured by HITACHI, LTD.), the existence of a coating layer of 0.35 µm to 1.05 µm in thickness was confirmed. The cross section of the electrode under the scanning electron microscope is shown in Fig. 11. The cell resistance and the relative electrostatic capacitance of the obtained cylindrical capacitor with respect to elapsed time are shown in Figs. 8 and 9, respectively.

Furthermore, generated gas was extracted from the cylindrical capacitor after 1000 hours of impressing a voltage of 2.5 V at 45°C, and its volume was measured. The volume of the generated gas was 14 ml, which was recognized as an depressing effect against gas generation, representing approximately 50% reduction with respect to 30 ml measured in Comparative Example 1 of no special arrangement to be described later. The measurement result of the volume of the generated gas is shown in Fig. 10. The measurement result of the volume of the gas that was obtained by repeating the present example except that the polarizable electrode was not coated with a gelling organic polymer compound is also shown in Fig. 10 (contrastive example to Example 5).

### Example 6

A polarizable electrode and then a cylindrical capacitor were fabricated in a similar manner as in Example 5 except that the coating solution was applied on both positive and negative electrodes. When a cross section of the electrode in a dry condition was observed under a scanning electron microscope as in Example 1, the existence of a coating layer of 0.30 µm to 1.1 µm in thickness was confirmed. The relative electrostatic capacitance and the cell resistance of the obtained cylindrical capacitor after 1000 hours were 0.93 and 2.6 mΩ, respectively.

Furthermore, the generated gas was extracted from the cylindrical capacitor after 1000 hours of impressing a voltage of 2.5 V at 45°C, and its volume was measured. The volume of the generated gas was 12 ml, which was recognized as an depressing effect against gas generation, representing approximately 60% reduction with respect to 30 ml measured in Comparative Example 1 of no special arrangement to be described later. The measurement result of the volume of the generated gas is shown in Fig. 10. The measurement result of the volume of the gas that was obtained by repeating the present example except that the polarizable electrode was not coated with a gelling organic polymer compound is also shown in Fig. 10 (contrastive example to Example 6).

### Comparative Example 1

A cylindrical capacitor was fabricated in a similar manner as in Example 1 except that the gelling organic polymer compound was not used, and the change of discharge performance was measured. The cell resistance and the relative electrostatic capacitance of this cylindrical capacitor with respect to elapsed time were also measured. Furthermore, the volume of generated gas was measured after 1000 hours and 2000 hours in a similar manner as in Example 1. The result was 30 ml after 1000 hours (see Fig. 10) and 62 ml after 2000 hours.

### Comparative Example 2

A polarizable electrode and then a cylindrical capacitor were fabricated in a similar manner as in Example 1 except that Coating Solution D was used instead of Coating Solution A and that the coating mass per unit area of the same polarizable electrode as in Example 1 after drying would become 6.2 mg/cm². Similarly as in Example 1, a cross section of the electrode in a dry condition was observed under a scanning electron microscope, and the existence of a coating layer of 6.0 µm to 6.5 µm in thickness was confirmed. The cross section of the electrode under the scanning electron microscope is shown in Fig. 12. The cell resistance of the obtained cylindrical capacitor was 9.0 mΩ. The internal resistance of the capacitor illustrated in Comparative Example 1, which used an electrode with no coating of a gelling organic polymer compound, was 2.1 mΩ. When the thickness of the coating layer after drying was 5 µm or more as above, an increase in the DC cell resistance became very large, accompanied by the deterioration in the output characteristics and the energy density.

### INDUSTRIAL APPLICABILITY

A polarizable electrode of the present invention is coated on the electrode surface with a gelling organic polymer compound to a thickness of less than 5 µm. Therefore, if this polarizable electrode is used in an electric double layer capacitor, the generation of gas can be significantly depressed. Such a capacitor has excellent durability since it is unlikely to develop a leakage of a non-aqueous electrolyte or deterioration failure. Furthermore, since the volume of the gas storage space within the capacitor can be reduced, capacitors that are efficient and small in size can be provided for industrial use.

## Claims

1. A polarizable electrode comprising activated carbon, wherein a surface thereof is coated with a thin film layer of a gelling organic polymer compound, a thickness of the thin film layer being less than 5 µm.

2. The polarizable electrode according to claim 1, wherein the thickness of the thin film layer is 2.5 µm or less.

3. The polarizable electrode according to claim 1 or 2, wherein the gelling organic polymer compound is an organic polymer compound having a "-COO-" bond.

4. The polarizable electrode according to any of claims 1 to 3, wherein the gelling organic polymer compound is an acrylic polymer.

5. The polarizable electrode according to any of claims 1 to 4, wherein the gelling organic polymer compound is polyalkyl alkenoate.

6. The polarizable electrode according to any of claims 1 to 5, wherein the gelling organic polymer compound is a compound capable of forming a stereocomplex.

7. The polarizable electrode according to any of claims 1 to 6, wherein the gelling organic polymer compound is any of polyalkyl methacrylate and polyalkyl acrylate.

8. The polarizable electrode according to any of claims 1 to 7, wherein the gelling organic polymer compound is poly(methyl methacrylate).

9. The polarizable electrode according to claim 1 or 2, wherein the gelling organic polymer compound is a polyvinylidene fluoride resin.
